# EUROPÄISCHE PATENTSCHRIFT

(11) **EP 3 672 818 B1**
(45) Veröffentlichungstag und Bekanntmachung des Hinweises auf die Patenterteilung: **26.01.2022**
(21) Anmeldenummer: 18749757.3
(22) Anmeldetag: 27.07.2018
(51) Int. Cl.: B60G 7/00, B62D 35/02

(54) **ABDECKTEIL FÜR EIN FAHRWERKSELEMENT EINES KRAFTFAHRZEUGS**
COVERING PART FOR A CHASSIS ELEMENT OF A MOTOR VEHICLE
PIÈCE DE RECOUVREMENT CONÇUE POUR UN ÉLÉMENT DE TRAIN ROULANT D'UN VÉHICULE AUTOMOBILE

(30) Priorität: 21.08.2017 DE 102017214492
(43) Veröffentlichungstag der Anmeldung: 01.07.2020
(73) Patentinhaber: Audi AG, 85045 Ingolstadt (DE)
(72) Erfinder: BÖSL, Bastian, 85748 Garching (DE)
(86) Internationale Anmeldenummer: PCT/EP2018/070448
(87) Internationale Veröffentlichungsnummer: WO 2019/038025

(56) Entgegenhaltungen:
- EP-A1- 2 476 565
- DE-A1-102011 052 175
- DE-A1-102014 003 305
- JP-A- H07 215 031
- JP-A- 2017 087 872
- KR-A- 20160 061 193
- US-B1- 8 500 149

## Beschreibung

Die Erfindung betrifft ein Abdeckteil für einen Fahrwerkslenker eines Kraftfahrzeugs gemäß der im Oberbegriff des Patentanspruches 1 angegebenen Art.

Sobald sich ein Kraftfahrzeug in Bewegung setzt, entstehen unzählige Luftverwirbelungen. Insbesondere der Bereich der Radaufhängung und die Unterseite eines Kraftfahrzeugs sind aerodynamische Problemzonen. Sowohl die Unterseiten moderner Kraftfahrzeuge als auch die Fahrwerkslenker, die einen Teil der Radaufhängung bilden, sind teilweise mit speziell gestalteten Abdeckungen versehen, um eine bessere Umströmung des Unterbodens und der Räder zu erzielen. Eine verbesserte Aerodynamik senkt unter Anderem den Verbrauch eines Kraftfahrzeugs und den Geräuschpegel. Zudem gewährleisten die Abdeckungen auch einen Schutz gegen Steinschläge und Beschädigungen beim Überfahren von Hindernissen.

So schlägt z. B. die US 7,654,544 ein Abdeckteil für einen Fahrwerkslenker mit einem nach unten offenen Hohlprofil vor. Der Pi-förmige Querschnitt des Fahrwerkslenkers ermöglicht eine kraft- und formschlüssige Befestigung des Abdeckteils an den Außenseiten des Lenkers.

Die DE 10 2013 006 253 A1 offenbart eine Abdeckung für einen Fahrwerkslenker, die eine Aufnahme für ein als Niet oder Schraube ausgebildetes Befestigungsmittel aufweist. Das Verschrauben der Abdeckung erlaubt zum Beispiel die lösbare Befestigung am Fahrwerkslenker. Weil die aus Kunststoff bestehende Abdeckung nicht ausreichendes Anzugsdrehmoment aufbaut, bildet eine metallische Hülse die Aufnahme. Zur Sicherung der Hülse in der Aufnahme können die Enden der Hülse umbördelt werden.

In der DE 10 2014 003 305 A1 wird eine gattungsbildende Abdeckung beschrieben, die mittels Montageklipps an einem Fahrwerkslenker befestigbar ist. Die Zugänglichkeit der in Fahrtrichtung nach vorne gerichteten Seite ist auf Grund eines Luftleitelements nicht gegeben, weswegen die Abdeckung nur einseitig an dem Fahrwerkslenker mittels Montageklipps befestigbar ist. Die komplexe Geometrie der abstehenden Befestigungsabschnitte erfordert eine genaue Einbaureihenfolge der Abdeckung. Darüber hinaus ist die Form der Abdeckung genau auf die Form des Fahrwerkslenkers abgestimmt.

Eine weitere gattungsgemäße, sämtliche Merkmale des Oberbegriffs des Patentanspruches 1 aufweisende Abdeckung für einen Fahrwerkslenker eines Kraftfahrzeugs ist in der JP 2017 087872 A offenbart.

Der Erfindung liegt die Aufgabe zu Grunde, eine Abdeckung für einen Fahrwerkslenker gemäß der im Oberbegriff des Patentanspruches 1 angegebenen Art weiterzubilden, dass eine einfache und verliersichere Montage der Abdeckung gewährleistet ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Weise umfasst ein Abdeckelement für ein Fahrwerkslenker, eine Abdeckfläche mit einem ersten und zweiten Befestigungsabschnitt, die sich von der Abdeckfläche zum Fahrwerkslenker hin erstrecken, sowie einer in Fahrtrichtung nach vorne hochgezogenen Wandung. Die distalen Befestigungsabschnitte sowie der Fahrwerkslenker weisen Aufnahmen für Befestigungsmittel auf, mittels denen das Abdeckelement auf der Unterseite des Fahrwerkslenkers befestigt ist. Die in Fahrtrichtung nach vorne hochgezogene Wandung dient der erhöhten Aerodynamik und schützt auch vor Steinschlägen. Sie schränkt jedoch die Zugänglichkeit zum Fahrwerkslenker und zu dem Befestigungsabschnitt ein, so dass die Befestigungsmittel nur einseitig anbringbar sind.

Zudem weist das Abdeckelement mindestens eine Öffnung auf, die den Zugang zu Befestigungsabschnitt ermöglicht.

Erfindungsgemäß ist die im Abdeckelement ausgebildete Öffnung im Zwischenraum zwischen den beiden Befestigungsabschnitten angeordnet, wobei die Befestigungsabschnitte von der Fläche des Abdeckelements zum Fahrwerkslenker hin erstreckend ausgebildet sind und so angeordnet sind dass sie sich im eingebauten Zustand in Lenkerlängsrichtung jeweils an einem der Stege des Fahrwerkslenkers erstrecken. Die erfindungsgemäße Ausgestaltung des Abdeckelements ermöglicht mittels der Öffnung den einfachen Zugang zu den distalen Befestigungsabschnitten. Insbesondere ist auch der Zugang zu dem in Fahrtrichtung nach vorn gerichteten Steg, der sonst auf Grund der hochgezogenen Wandung nicht zugänglich ist, gewährleistet. Hierdurch ist in vorteilhafter Weise die Befestigung des Abdeckelements an beiden Stegen des Fahrwerkslenkers ermöglicht. Diese Ausführungsform der Erfindung gewährleistet nicht nur eine besonders einfache, sondern auch eine verliersichere Montage des Abdeckelements. Ein weiterer Vorteil ist der höhere Grad an Freiheit bei der axialen und lateralen Anpassung des Abdeckelements, so dass eine Form des Abdeckelements an verschiedene Fahrwerkslenker mit unterschiedlichen Geometrien, z. B. unterschiedlichen Breiten, montierbar ist.

Ein weiterer Vorteil ist, dass der Zugang zu beiden Befestigungsabschnitten in besonders einfacher Weise gewährleistet ist.

Vorzugsweise ist die Öffnung des Abdeckelements als Rechteck ausgebildet. Diese Ausführungsform ermöglicht nicht nur den besonders einfachen Zugang der Öffnung, sondern bietet die Möglichkeit jede Seite des Rechtecks zur Ausbildung eines Scharniers zu nutzen.

Eine bevorzugte Ausführungsform der Erfindung sieht vor, dass die Öffnung in der Abdeckung mittels einer Klappe verschließbar ist. Hierdurch ist nicht nur die Aerodynamik des Abdeckteils gewährleistet, sondern der Fahrwerkslenker ist auf der ganzen Länge der Abdeckung vor Beschädigungen geschützt.

Vorzugsweise ist die Klappe als integraler Bestandteil des Abdeckelements ausgebildet, wobei das gesamte Abdeckelement bevorzugt aus Kunststoff ausgebildet ist. Die Vorteile dieser Ausführungsform sind nicht nur eine erleichterte Handhabung eines einzelnen Elements, sondern auch eine sehr einfache und günstige Herstellung, beispielweise als einstückiges Spritzgussteil. Ein weiterer Vorteil ist, dass die Klappe gut befestigt und verliersicher angebracht ist.

Bevorzugt ist die Klappe mittels eines materialeinheitlichen Filmscharniers im Abdeckelement integriert. In Kombination mit der rechteckigen Form der Öffnung ist eine gewisse Scharnierlänge ermöglicht, die die Funktionsfähigkeit des Filmscharniers gewährleistet. Filmscharniere ermöglichen die einfache Herstellung von kompletten Teilen in z. B. einem einzigen Spritzgießvorgang. Es ist denkbar, dass die Klappe mittels eines oder mehreren Rastmechanismen an der Öffnung fixierbar ist. Insgesamt ermöglicht diese Ausführungsform der Erfindung eine besonders einfache Handhabung und Montage. Weitere Vorzüge dieser Ausführungsform sind die Reduzierung der Anzahl von Einzelteilen, die vereinfachte Logistik, die gewährleistete Verliersicherheit und der reduzierte Zeitaufwand für den Ein- und Ausbau bei der Montage.

Wie bereits ausgeführt, sind der erste und der zweite Befestigungsabschnitt quer zur Lenkerlängsrichtung voneinander beabstandet, so dass sie auf mehr oder weniger parallelen Ebenen zueinander angeordnet sind, wobei die Öffnung im Zwischenraum der beiden Befestigungsabschnitte ausgebildet ist.

Im eingebauten Zustand sind die Befestigungsabschnitte auf der Außenseite und / oder auf der Innenseite der Stege des Fahrwerkslenkers angeordnet. Hierdurch können beide Stege in vorteilhafter Weise als Anbindungsstellen für das Abdeckelement an den Fahrwerkslenker dienen. Sowohl die Befestigungsabschnitte, als auch die Stege des Fahrwerkslenkers weisen Aufnahmen für Befestigungsmittel auf. Die Befestigung kann beispielsweise mittels Montageklipps, die eine preiswerte Variante darstellen und einfache Handhabung gewährleisten, erfolgen. Vorteilhaft an dieser Ausführungsform sind nicht nur die sehr einfache Montage des Abdeckelements, sondern auch die Befestigung an beiden Stegen des Fahrwerkslenkers, die eine verliersichere Montage gewährleistet. Des Weiteren ermöglicht die einfache Geometrie der distalen Befestigungsabschnitte eine erhöhte axiale sowie laterale Freiheit bei der Montage des Abdeckelements. Der Vorteil ist eine variable Anpassung des Abdeckelements an unterschiedliche Varianten eines Fahrwerkslenkers, z. B. mit unterschiedlichen Breiten.

Es ist denkbar, dass nicht nur die Größe der Öffnung im Abdeckelement variabel ist, sondern auch die Anzahl der Öffnungen variieren kann. Weiter ist es denkbar, dass sowohl die Länge der Befestigungsabschnitte als auch ihre Anzahl variabel ist. Diese verschiedenen Möglichkeiten an Ausführungen ermöglichen eine vielfältige Kombination an Öffnungen und deren zugeordneten Befestigungsabschnitten. Das wiederum gewährleistet eine einfache Montage und auch eine verliersichere Anbringung des Abdeckelements.

Gemäß einer weiteren bevorzugten Ausführungsform der Erfindung sind das Abdeckelement, die Klappe und die Befestigungsabschnitte aus einem einzigen Pressteil ausgebildet, z. B. als einstückiges Spritzgussteil. Die Vorzüge einer integralen Ausbildung des Abdeckelements sind die einfache und günstige Herstellung, die erleichterte Handhabung der Teile bei der Logistik und Montage, sowie die gute und verliersichere Festigung des einstückigen Elements, insbesondere bei Schlechtwegstrecken.

Weitere Vorteile und Anwendungsmöglichkeiten der vorliegenden Erfindung ergeben sich aus der nachfolgenden Beschreibung in Verbindung mit den in der Zeichnung dargestellten Ausführungsbeispielen.

In der Zeichnung bedeutet:
- Fig. 1: eine seitliche Draufsicht des erfindungsgemäßen Abdeckelements;
- Fig. 2: das Abdeckelement gemäß Fig. 1 am Fahrwerkslenker montiert; und
- Fig. 3: eine vergrößerte Ansicht von unten auf die Öffnung des Abdeckelements in Fig. 1.

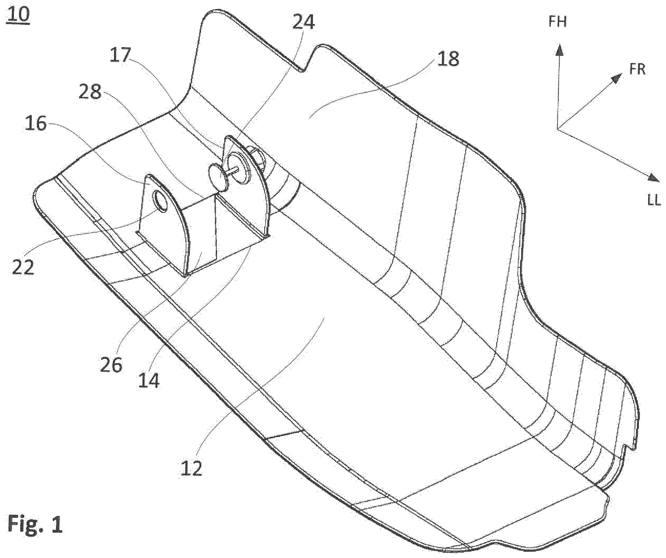

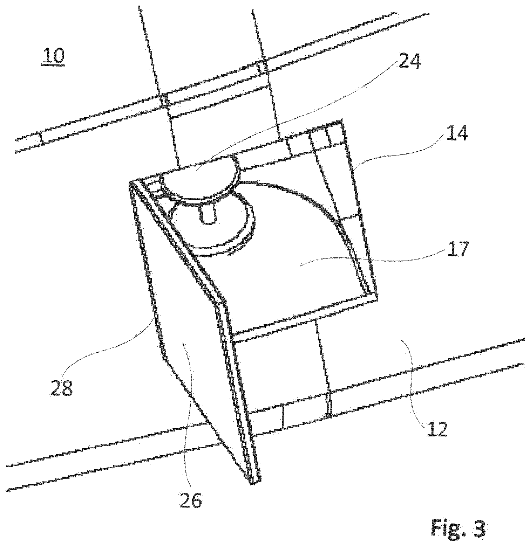

Fig. 1 bis 3 zeigen in einer schematischen Darstellung ein insgesamt mit der Bezugsziffer 10 bezeichnetes Abdeckelement für einen Fahrwerkslenker 19.

Das Abdeckelement 10 umfasst eine im Wesentlichen horizontal ausgebildete Abdeckfläche 12, eine Öffnung 14 und mindestens einen ersten Befestigungsabschnitt 16, der von der Abdeckfläche 12 in Fahrzeughochrichtung FH nach oben ausgebildet ist. Vorliegend ist ein zweiter Befestigungsabschnitt 17 ausgebildet, der auch mittels der Öffnung 14 zugänglich ist. Der erste Befestigungsabschnitt 16 und der zweite Befestigungsabschnitt 17 sind quer zur Lenkerlängsrichtung LL beabstandet und erstrecken sich in Lenkerlängsrichtung LL.

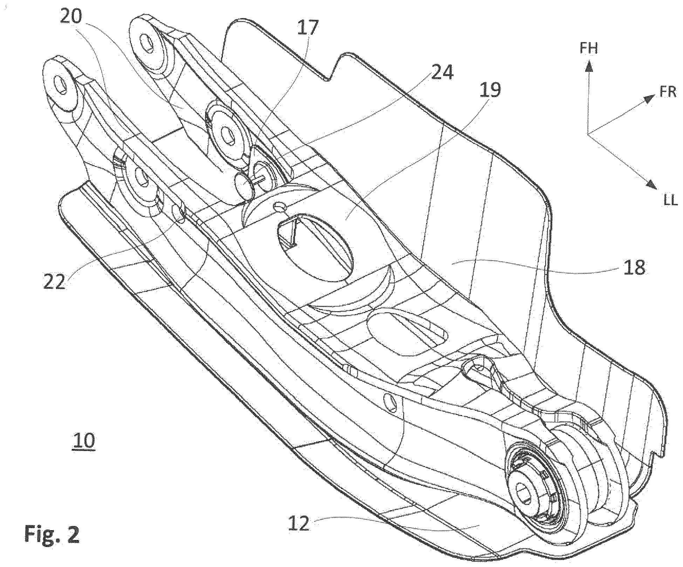

Wie Fig. 1 und Fig. 2 zeigen, ist die Abdeckung in Fahrtrichtung FR mit einer hochgezogenen Wandung 18 ausgebildet, die den Zugang zum zweiten Befestigungsabschnitt 17 beeinträchtigt. Die beiden Befestigungsabschnitte 16, 17 erstrecken sich im eingebauten Zustand entlang der Stege 20 des Fahrwerkslenkers 19. Die Befestigungsabschnitte 16, 17 können sich auf der Innenseite und/oder auf der Außenseite der Stege 20 erstrecken. Sowohl die Befestigungsabschnitte 16, 17 als auch die Stege 20 des Fahrwerkslenkers 19 weisen Aufnahmen 22 für Befestigungsmittel auf. Vorliegend ist das Abdeckelement 10 mittels eines Montageklipps 24 am Steg 20 des Fahrwerkslenkers 19 befestigt.

Die Öffnung 14 des Abdeckelements 10 ist vorteilhaft zwischen dem ersten Befestigungsabschnitt 16 und dem zweiten Befestigungsabschnitt 17 positioniert und ermöglicht dadurch den einfachen Zugang zu beiden distalen Bestfestigungsabschnitten 16, 17. Besonders vorteilhaft ist der Zugang zu dem in Fahrtrichtung FR nach vorn gerichteten Befestigungsabschnitt 17 und dem korrespondierenden Steg 20 des Fahrwerkslenkers 19, die beide auf Grund der hochgezogenen Wandung 18 nicht zugänglich sind. Es ist denkbar, dass sowohl die Größe der Öffnung 14, als auch die Anzahl der Öffnungen 14 beliebig variierbar ist, und auch dass die Länge sowie die Anzahl der Befestigungsabschnitte 16, 17 variabel sind.

Das Abdeckelement 10 ist bevorzugt aus Kunststoff ausgebildet und hat vorzugsweise eine rechteckige Öffnung 14, die mittels einer Klappe 26 verschließbar ist. Die Klappe 26 kann mittels eines Rastmechanismus, der hier aus Gründen der Übersichtlichkeit nicht gezeigt ist, an der Öffnung 14 fixiert sein. Vorzugsweise sind die Klappe 26 und das Abdeckelement 10 als ein integrales Teil ausgebildet, wobei die Klappe 26 mittels eines materialeinheitlichen Filmscharniers 28 verliersicher im Abdeckteil 10 integriert ist.

## Patentansprüche

1. Abdeckelement (10) für einen Fahrwerkslenker (19) eines Kraftfahrzeugs, umfassend eine Abdeckfläche (12), die zumindest einen Teil des Fahrwerkselements abdeckt, sowie einen ersten Befestigungsabschnitt (16) und einen zweiten Befestigungsabschnitt (17), wobei die Befestigungsabschnitte (16, 17) jeweils eine Aufnahme (22) für ein Befestigungsmittel (24) aufweisen, wobei das Abdeckelement (10) mindestens eine Öffnung (14) aufweist, mittels der der erste Befestigungsabschnitt (16) zugänglich ist,
**dadurch gekennzeichnet, dass**
die Befestigungsabschnitte (16, 17) sich in Fahrzeughochrichtung (FH) und in Lenkerlängsrichtung (LL) erstreckend ausgebildet und quer zur Lenkerlängsrichtung (LL) beabstandet gegenüberliegend angeordnet sind, und dass die Öffnung (14) im Zwischenraum zwischen den beiden gegenüberliegend angeordneten Befestigungselementen (16, 17) angeordnet ist.

2. Abdeckelement (10) nach Anspruch 1,
**dadurch gekennzeichnet, dass**
die Öffnung (14) eine rechteckige Form aufweist.

3. Abdeckelement (10) nach Anspruch 1 oder 2,
**dadurch gekennzeichnet, dass**
die Öffnung (14) mittels einer Klappe (26) verschließbar ist.

4. Abdeckelement (10) nach Anspruch 3,
**dadurch gekennzeichnet, dass**
die Klappe (26) als integraler Bestandteil des Abdeckelements (10) ausgebildet ist.

5. Abdeckelement (10) nach Anspruch 4,
**dadurch gekennzeichnet, dass**
die Klappe (26) mittels eines materialeinheitlichen Filmscharniers (28) im Abdeckelement (10) integriert ist.

6. Abdeckelement (10) nach Anspruch 1,
wobei der Fahrwerkslenker (19) zwei Stege (20) aufweisend ausgebildet ist,
**dadurch gekennzeichnet, dass**
im verbauten Zustand die Befestigungsabschnitte (16, 17) an der Außenseite der Stege (20) liegend oder an der Innenseite der Stege (20) liegend angeordnet sind.

7. Abdeckelement (10) nach einem der vorgenannten Ansprüche,
**dadurch gekennzeichnet, dass**
mehrere Öffnungen (14) mit zugeordneten ersten und zweiten Befestigungsabschnitten (16, 17) sich über die Lenkerlängsrichtung (LL) erstrecken.

8. Abdeckelement (10) nach einem der vorgenannten Ansprüche,
**dadurch gekennzeichnet, dass**
die Länge der Öffnung (14) oder die Länge der Öffnungen (14) sowie die Länge des ersten Befestigungsabschnitts (16) und des zweiten Befestigungsabschnitts (17) variabel ist.

9. Abdeckelement (10) nach einem der vorgenannten Ansprüchen,
**dadurch gekennzeichnet, dass**
das Abdeckelement (10), die Klappe (26) und der (die) Befestigungsabschnitt(e) (17) als einteiliges Pressteil ausgebildet sind.

## Claims

1. Covering element (10) for a suspension link (19) of a motor vehicle, comprising a cover surface (12), which covers at least a portion of the suspension element, and a first fastening section (16) and a second fastening section (17), wherein the fastening sections (16, 17) each have a mount (22) for a fastening means (24), wherein the covering element (10) has at least one opening (14), by means of which the first fastening section (16) is accessible, **characterised in that** the fastening sections (16, 17) are designed to extend in vertical direction of the vehicle (FH) and in longitudinal direction of the link (LL) and are arranged spaced apart opposite one another transversely to the longitudinal direction of the link (LL), and **in that** the opening (14) is arranged in the gap between the two fastening elements (16, 17) arranged opposite one another.

2. Covering element (10) according to claim 1, **characterised in that** the opening (14) has a rectangular form.

3. Covering element (10) according to claim 1 or 2, **characterised in that** the opening (14) can be closed by means of a flap (26).

4. Covering element (10) according to claim 3, **characterised in that** the flap (26) is designed as an integral part of the covering element (10).

5. Covering element (10) according to claim 4, **characterised in that** the flap (26) is integrated into the covering element (10) by means of a film hinge (28) made of the same material.

6. Covering element (10) according to claim 1, wherein the suspension link (19) is designed to have two bars (20), **characterised in that**
in the fitted state the fastening sections (16, 17) are arranged lying on the outside of the bars (20) or on the inside of the bars (20).

7. Covering element (10) according to any of the preceding claims, **characterised in that**
a plurality of openings (14) with associated fastening sections (16, 17) extend over the longitudinal direction of the link (LL).

8. Covering element (10) according to any of the preceding claims, **characterised in that**
the length of the opening (14) or the length of the openings (14) and the length of the first fastening section (16) and the second fastening section (16, 17) is variable.

9. Covering element (10) according to any of the preceding claims, **characterised in that**
the covering element (10), the flap (26) and the fastening section(s) (17) are in the form of a one-piece pressed part.

## Revendications

1. Élément de recouvrement (10) pour un bras de suspension de train roulant (19) d'un véhicule automobile, comprenant une surface de recouvrement (12) qui recouvre au moins une partie de l'élément de train roulant, ainsi qu'une première section de fixation (16) et une seconde section de fixation (17), dans lequel les sections de fixation (16, 17) présentent chacune un logement (22) pour un moyen de fixation (24), dans lequel l'élément de recouvrement (10) présente au moins une ouverture (14) par l'intermédiaire de laquelle la première section de fixation (16) est accessible, **caractérisé en ce que**,
les sections de fixation (16, 17) sont réalisées pour s'étendre dans la direction de hauteur de véhicule (FH) et dans la direction longitudinale de train roulant (LL) et sont agencées l'une en face de l'autre à une distance transversalement par rapport à la direction longitudinale de train roulant (LL), et **en ce que** l'ouverture (14) est agencée dans l'espace intermédiaire entre les deux éléments de fixation (16, 17) agencés l'un en face de l'autre.

2. Élément de recouvrement (10) selon la revendication 1, **caractérisé en ce que**, l'ouverture (14) présente une forme rectangulaire.

3. Élément de recouvrement (10) selon la revendication 1 ou 2, **caractérisé en ce que**, l'ouverture (14) peut être fermée au moyen d'un clapet (26).

4. Élément de recouvrement (10) selon la revendication 3, **caractérisé en ce que**, le clapet (26) est réalisé comme partie intégrante de l'élément de recouvrement (10).

5. Élément de recouvrement (10) selon la revendication 4, **caractérisé en ce que**, le clapet (26) est intégré dans l'élément de recouvrement (10) au moyen d'un film charnière (28) fait du même matériau.

6. Élément de recouvrement (10) selon la revendication 1, dans lequel le bras de suspension de train roulant (19) est réalisé pour présenter deux branches (20), **caractérisé en ce que**,
à l'état monté, les sections de fixation (16, 17) sont agencées sur le côté extérieur des branches (20) ou sur le côté intérieur des branches (20).

7. Élément de recouvrement (10) selon l'une quelconque des revendications précédentes, **caractérisé en ce que**
plusieurs ouvertures (14) avec des première et seconde sections de fixation (16, 17) associées s'étendent dans la direction longitudinale de train roulant (LL).

8. Élément de recouvrement (10) selon l'une quelconque des revendications précédentes, **caractérisé en ce que**
la longueur de l'ouverture (14) ou la longueur des ouvertures (14) ainsi que la longueur de la première section de fixation (16) et de la seconde section de fixation (17) sont variables.

9. Élément de recouvrement (10) selon l'une quelconque des revendications précédentes, **caractérisé en ce que**
l'élément de recouvrement (10), le clapet (26) et la ou les section(s) de fixation (17) sont réalisés sous la forme d'une pièce moulée par compression monobloc.
